# EUROPEAN PATENT APPLICATION

(11) **EP 2 750 091 A1**
(43) Date of publication of application: **02.07.2014**
(21) Application number: 12306682.1
(22) Date of filing: 27.12.2012
(51) Int. Cl.: G06Q 20/32, G06Q 20/40, H04M 1/725, H04W 12/12

(54) **Method for controlling a contactless transaction**

(71) Applicant: Gemalto SA, 92190 Meudon (FR)
(72) Inventor: Thill, Michel, 92190 Meudon (FR); Muller, Marc, 92190 Meudon (FR); Spyropoulos, Evangelos, 92190 Meudon (FR)
(74) Representative: Afdili, Ilham

(57) **Abstract**

The invention relates to a method for controlling contactless transactions of contactless applications stored on a first secure element, said contactless transactions being operated with a portable device, said portable device comprising said first secure element. The method is characterised in that it comprises a step (S1) of pairing said first secure element with a second secure element, a step (S2) of requesting to the second secure element an authorization to execute a predetermined number of contactless transactions, a step (S3) of requesting to the second secure element another authorization to execute a new predetermined number of contactless transactions when a predetermined contactless transaction's threshold is reached.

## Description

### FIELD OF THE INVENTION

The present invention relates generally to contactless transactions and more specifically to a method for controlling contactless transaction.

### BACKGROUND OF THE INVENTION

Contactless applications like payment and transport are being deployed and a user can use his handset for performing associated transactions.

In the NFC (near field communication) technology, these applications for example do not require user control. The user has just to tap the corresponding reader with his handset and the transaction is validated.

Nevertheless, there is no control from the user on the transaction. If the handset is for example stolen, a thief is able to use these applications, and to perform the transactions as if he were the user himself.

There is a need for a method for controlling such transactions.

It is then an object of the invention to provide a method for controlling contactless transactions.

Thereto, the present invention provides a method for controlling contactless transactions of contactless applications stored on a first secure element, said contactless transactions being operated with a portable device, said portable device comprising said first secure element, characterised in that it comprises a step of pairing said first secure element with a second secure element, a step of requesting to the second secure element an authorization to execute a predetermined number of contactless transactions, a step of requesting to the second secure element another authorization to execute a new predetermined number of contactless transactions when a predetermined contactless transaction's threshold is reached.

According to other aspects of the invention, the method may comprise establishing an RF communication between the first secure element and the second secure element so that the first secure element and the second secure element communicates securely.

According to other aspects of the invention, the RF communication may be comprised between 400 MHz to 5 GHz.

According to other aspects of the invention, the RF communication may be a Bluetooth communication or WIFI communication or Bluetooth low energy or Zigbbe.

According to other aspects of the invention, the method may comprise regenerating said new predetermined number of contactless transactions in the first secure element only if the communication between the first and the second secure element is established.

According to other aspects of the invention, the method may comprise using a SIM card as first secure element.

According to other aspects of the invention, the method may comprise using a micro SD card as first secure element.

Thanks to the invention, it is advantageously possible to limit the use of contactless transactions when the handset is stolen.
The invention provides advantageously a secure direct link with the user.

This invention allows validating a predetermined number of authorized contactless transactions. A live validation of transactions validations just before their use are not considered as contactless transactions are mainly used as they are fast, and ready for use. It allows to always having one or more authorised transaction(s) ready for use in the case the user has decided it.

The various aspects, features and advantages of the invention will become more fully apparent to those having ordinary skill in the art upon careful consideration of the following Detailed Description, given by way of example thereof, with the accompanying drawings described below:

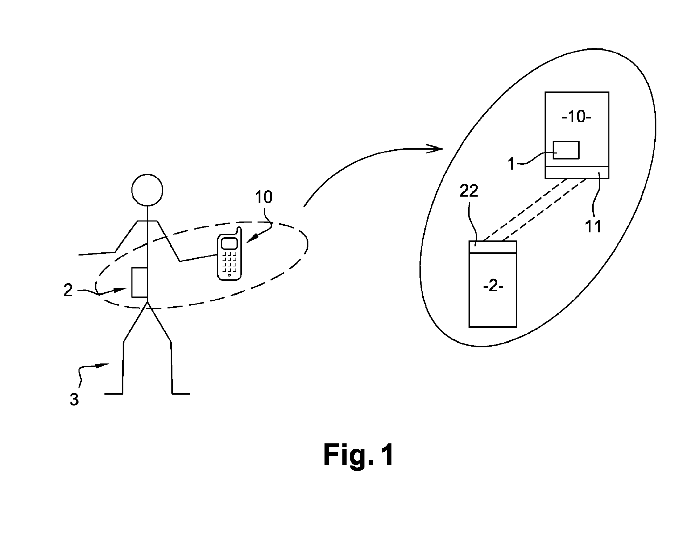

**FIGURE.1** schematically shows a diagram of an embodiment of the method of the present invention

### DETAILED DESCRIPTION

The present invention may be understood according to the detailed description provided herein.

Shown in figure 1 is a mobile device 10 of a user 3 which comprises a first secure element 1.

The mobile device 10 is for example a handset. It will be well understood that it is not a limited example and any suitable device such as a tablet, or other mobile device adapted to receive or embed a secure element can be used.

The first secure element 1 comprises contactless applications and is adapted to communicate with a second secure element 2.

The first secure element 1 comprises a predetermined number of contactless transactions "n", such as NFC transactions. This predetermined number "n" of contactless transactions represents the number of limited allowed contactless transactions, i.e. the maximum of allowed valid contactless transactions the user can do. The user is then at least allowed to run as many transactions as the predetermined number "n" of authorised transactions. As represented in figure 1, the maximum contactless transactions "n" allowed is set to five.

The first secure element 1 also comprises a predetermined threshold "T" of contactless transactions, and (not represented) means for counting the validated transactions made by the user, (not represented) means for comparing the validated contactless transactions with the predetermined stored threshold "T".

The first secure element 1 comprises a first communication means 11, and the second secure element 2 comprises a second communication means 22 so that the first secure element 1 and the second secure element 2 can exchange data securely.

The first secure element 1 is able to communicate with an external element either as it embeds a RF (radio frequency) link or by using the radio frequency of the mobile device 10, for example using the Bluetooth (BT) RF of the mobile device 10.

The RF communication may be a Bluetooth communication or WIFI communication or Bluetooth low energy or Zigbbe or of any similar protocol using bandwidth between 400 MHz to 5 GHz.

The second secure element 2 comprises credentials associated to the user 3 so that to authenticate the user 3, and allow the communication with the first secure element 1.

The second secure element 2 is a secure device comprising a cell or battery, and is adapted to be paired either with the secure element or with the RF link of the mobile device 10. The second secure element 2 may be started by the user or may be continuously monitoring the communication on the RF link.

The user 3 wears for example the second secure element in a pocket of his pants.

In a first embodiment, the first secure element 1 is a smart card such a SIM card, and the first communication means 11 and the second communication means 11 are RF communication means either embedded in the SIM card or used via the RF communication means of the mobile device 10 through ISO link.

The first communication means 11 and the second 22 communication means are adapted to establish a secure communication channel. A method according to the invention then comprises establishing an RF communication between the first secure element 1 and the second secure element 2 so that the first secure element and the second secure element communicates securely. The method for controlling contactless transactions of contactless applications stored on the first secure element 1, comprises a step (S1) of pairing said first secure element 1 with the second secure element 2: a secure communication channel is established between the first secure element 1 and the second secure element 2 via the first and the second communications means 11,22. After an authentication step using the credentials as stored in the second secure element, both the SIM card 1 and second secure element 2 are then paired.

After this pairing, the method comprises a step (S2) of requesting to the second secure element 2 an authorization to execute the predetermined number "n" of contactless transactions. As represented, the SIM cards requests the authorization to execute five contactless transactions. Thus only a few contactless transactions are possible.

The method comprises a step (S3) of requesting to the second secure element 2 a new authorization to execute a new predetermined number of contactless transactions when the predetermined contactless transaction's threshold "T" is reached. As represented, the predetermined threshold of contactless transactions is set to three.

After three transactions, i.e. when the predetermined threshold "T" of transactions is reached, the SIM card 1 requests a new authorization. The SIM card 1 sends a request to the second secure element 2 to obtain validation for a new batch of contactless transactions.

The method comprises regenerating said new predetermined number of contactless transactions in the first secure element 1 only if the communication between the first secure element 1 and the second secure element 2 is established.

It will be well understood that the new predetermined number of allowed transactions, i.e. of regenerated transactions can be set by default and be the same than the initial one "n" or can be modified by the user.

If the second secure element 2 does not answer to the new authorization request, then no new transactions will be validated. Then when the mobile device 10 is then too far from the second secure element, no RF communication link can be established between the two secure elements 1,2. Then even if the mobile device 10 is for example stolen, no more contactless transactions than the one predetermined by the user can be validated.

No one would be able to do more than five transactions if this predetermined number in not regenerated.

It will be well understood that the threshold of possible transactions "T" can be null or set by default to a predetermined value by the user or can be modified by the user himself.

According to another embodiment of the invention, the first secure element 1 is a micro SD card as known in the art.

According to another embodiment of the invention, the number of limited contactless transactions can be modified by the user at each validation's request.

According to another embodiment, when there is no second secure element, and if the first secure element is a SIM card, a request of a PIN code is proposed to the user, and a contactless transactions batch is allowed if the user successfully replies to this request.

Thanks to the invention, the NFC transactions are controlled. Advantageously, only a limited number of transactions are allowed.

## Claims

1. Method for controlling contactless transactions of contactless applications stored on a first secure element, said contactless transactions being operated with a portable device, said portable device comprising said first secure element, **characterised in that** it comprises
a. a step (S1) of pairing said first secure element with a second secure element,
b. a step (S2) of requesting to the second secure element an authorization to execute a predetermined number of contactless transactions,
c. a step (S3) of requesting to the second secure element another authorization to execute a new predetermined number of contactless transactions when a predetermined contactless transaction's threshold is reached.

2. Method according to claim 1,**characterised in that** it comprises establishing an RF communication between the first secure element and the second secure element so that the first secure element and the second secure element communicates securely.

3. Method according to claim 2, **characterised in that** the RF communication is comprises between 400 MHz to 5 GHz.

4. Method according to claim 2 or 3, **characterised in that** the RF communication is a Bluetooth communication or WIFI communication or Bluetooth low energy or Zigbbe.

5. Method according to any of the previous claims, **characterised in that** it comprises regenerating said new predetermined number of contactless transactions in the first secure element only if the communication between the first and the second secure element is established.

6. Method according to any of the previous claim, **characterised in that** it comprises using a SIM card as first secure element.

7. Method according to any of the claims 1 to 5, **characterised in that** it comprises using a micro SD card as first secure element.
